# EUROPEAN PATENT SPECIFICATION

(11) **EP 1 290 846 B1**
(45) Date of publication and mention of the grant of the patent: **17.03.2010**
(21) Application number: 01934778.0
(22) Date of filing: 18.05.2001
(51) Int. Cl.: H04L 29/02, H04L 12/56

(54) **DEVICE AND METHOD FOR SERVICE DIFFERENTIATION IN A COMMUNICATION NETWORK**
EINRICHTUNG UND VERFAHREN ZUR DIENSTDIFFERENZIERUNG IN EINEM KOMMUNIKATIONSNETZ
DISPOSITIF ET PROCEDE DE DIFFERENCIATION DES SERVICES DANS UN RESEAU DE COMMUNICATION

(30) Priority: 25.05.2000 SE 0001956
(43) Date of publication of application: 12.03.2003
(73) Proprietor: TELIASONERA AB, 106 63 Stockholm (SE)
(72) Inventor: BERGSTEN, Anders, S-977 52 Luleå (SE); BORG, Niklas, S-977 54 Luleå (SE); JOHANSSON, Joachim, S-977 52 Luleå (SE); SVANBERG, Emil, S-973 32 Luleå (SE)
(74) Representative: Hopfgarten, Nils
(86) International application number: PCT/SE2001/001148
(87) International publication number: WO 2001/091406

(56) References cited:
- EP-A2- 1 017 203
- WO-A1-00/30307
- YEOM I., NARASIMHA REDDY A.L.: 'Impact of marking strategy on aggregated flows in a differentiated service network' 7TH INTERNATIONAL WORKSHOP ON QUALITY OF SERVICE (IWQOS'99) 31 May 1999 - 04 June 1999, pages 156 - 158, XP010335394
- BLESS R., WEHRLE K.: 'Evaluation of differentiated services using an implementation under linux' 7TH INTERNATIONAL WORKSHOP ON QUALITY OF SERVICE (IWQOS'99) 31 May 1999 - 04 June 1999, pages 97 - 106, XP010335390
- SAHU S. ET AL.: 'A quantitative study of differentiated services for the internet' GLOBAL TELECOMMUNICATIONS CONFERENCE 1999 (GLOBECOM 99) vol. 3, 05 December 1999 - 09 December 1999, pages 1808 - 1817, XP001003916
- CLARK DAVID D. ET AL.: 'Explicit allocation of best-effort packet delivery service' IEEE/ACM TRANSACTIONS ON NETWORKING vol. 6, no. 4, August 1998, pages 362 - 373, XP000771971
- BERNET Y. ET AL.: 'A conceptual model for diffserv routers' INTERNET-DRAFT, [Online] pages 1 - 26, XP002958625 Retrieved from the Internet: <URL:www.ietf.org> [retrieved on 2001-03-21]

## Description

### Field of the invention

The invention relates to a device and a procedure for service differentiation in a communication network, and more exactly, for management of guaranteed services and "best effort" services within a frame service with predetermined bandwidth, according to the pre-characterizing portions of claims 1 and 7 respectively.

### Technical background

Within Internet, introduction of functionality for QoS (Quality of Service) and service differentiation is beginning. From just providing one type of service "best effort" one wants to be able to differentiate different flows. At the same time as concept in order to introduce QoS are produced within IETF (Internet Engineering Task Force), for instance DiffServ (Differentiated Services), functionality to support such services are beginning to be implemented in routers and other network elements. Within the working group DiffServ (within IETF) "A.Conceptual Model for DiffServ Routers"(http://www.ietf.org/internetdrafts/draft-ietf-diffserv-model-01.txt) has been produced. This model is built of "Traffic Conditioning Blocks" (TCBs), where a TCB is used for each interface and direction of the traffic flow. Each TCB consists in its turn of a combination of a number of components, classification, metering, action and queuing. The component classification classifies the packets to divide them into some form of flows. In metering, the transmission speed is metered in number of packets and bits per second to check if it complies with the agreement of how much the customer is allowed to transmit. Depending on whether the traffic is kept within given limits or not, different actions are executed. An action can for instance be to throw away packets if the flow is not kept within given limits. In the last step, queuing, the packets are queued up to be transmitted in correct order. One also within different fields is beginning to specify more complex services which shall be based on the new functionality.

In YEOM I. And NARASIMHA REDDY A.L.: "Impact of Marking Strategy on Aggregated Flows in a Differentiated Service Network", 7th International Workshop on Quality of Service (IWQOS'99), 31 May- 04 June 1999, Pages 156-158, XP010335394 a method is disclosed for making it possible to differentiate services within an aggregate. Data packets belonging to a service within an aggregate can be marked in order to achieve a certain performance, while staying within the contract-profile. Packets belonging to flows which exceeds the contract will be marked out.

A new type of service ISPs (Internet Service Provider) want to effect an overall frame service which in its turn is divided into a number of part services. One example of such a frame service is an Internet access directed to tenant households where the frame service has a fixed bandwidth. Within this frame service then a number of part services shall be offered, of which some are guaranteed a certain bandwidth. Examples of such ones might be IP-telephony, personal TV, etc. The bandwidth that is left then can be used for a "best effort"-service. The desire consequently is to have possibility to use one's whole bandwidth, irrespective of how large part of it that one for the time being is using for "guaranteed" services. The problem is that TCBs as the function today only can look at once flow at a time. The TCBs consequently can look after one guaranteed service each and attend to that they will not have too much bandwidth, but the TCBs of today can not see how much bandwidth that is left for the "best effort"-service.

One way of solving this problem with the technology of today is to cascade two TCBs, of which the first one attends to per part service and the second one looks at the aggregate, that is, the frame service, and limits the total bandwidth for the whole aggregate. The problem with such a solution is that one then in the second TCB cannot distinguish between the different part services when one throws packets away, and by that also packets from the guaranteed services will be thrown away if the aggregate exceeds what the household has ordered/subscribed to. The guaranteed services then will not have their promised bandwidth.

### Summary of the invention

Above mentioned problem is solved by a device according to claim 1 and a procedure according to claim 7. Thus, according to a first aspect of the present invention a device is provided for service differentiation in a communication network, which device includes a classification device arranged to divide data packets of different services into different flows. For each flow the device includes a metering device, arranged to meter data transmission speed in respective flow. For each metering device there further is an action device arranged to execute actions depending on the belonging metering device. A queuing device is arranged to queue packets from said different action devices for transmission. A first metering device of said metering devices. is adapted to a first service and for that reason includes a calculation device arranged to calculate control data depending on all metering devices connected to the classification device. Further, the action device of the first service is arranged to execute actions on the flow belonging to first service depending on said control data. Said services include a frame service with predetermined bandwidth, and within this frame service said first service and a second service, the second service being guaranteed a given bandwidth and said first service is arranged to allocate available bandwidth within the frame service. By available bandwidth within the frame service is meant in one embodiment not only bandwidth which is not allocated by guaranteed services, but also bandwidth which is guaranteed one for the time being unutilized guaranteed service. Said control data is the sum of metered data transmission speed of all flows from the classification device.

Said metering device preferably includes control devices, adapted to check how metered transmission speed for a service is to agreed bandwidth of the service in question. Further, said action device includes means to throw away data packets if the metered transmission speed exceeds agreed bandwidth.

Said metering device of the first service includes control devices, adapted to check how the summed up transmission speed is to the predetermined bandwidth of the frame service. Further, the action device of the first service is adapted to throw away data packets of the first service in the case that the summed up transmission speed in the device exceeds the predetermined bandwidth of the frame service.

Said classification device has a data input for input of data belonging to different services, and said queuing device has a data output for output of data belonging to different services. The device is preferably part of a network unit including a classification device for each interface and traffic direction in the device. In a preferred embodiment said network unit is a DiffServ-router.

A second aspect of the present invention is related to a procedure for service differentiation in a communication network, in which network metering and processing of flows are executed, belonging to a number of different services within a frame service with predetermined bandwidth. The procedure includes the steps to meter the transmission speed of a first service which utilizes available bandwidth within the frame service, meter the transmission speed of a second service which is guaranteed access to a given bandwidth within the frame service, calculate control data depending on metered transmission speed of said different services, including said first and second service, and to execute actions on the flow of the first service depending on said control data.

### Brief description of the drawing

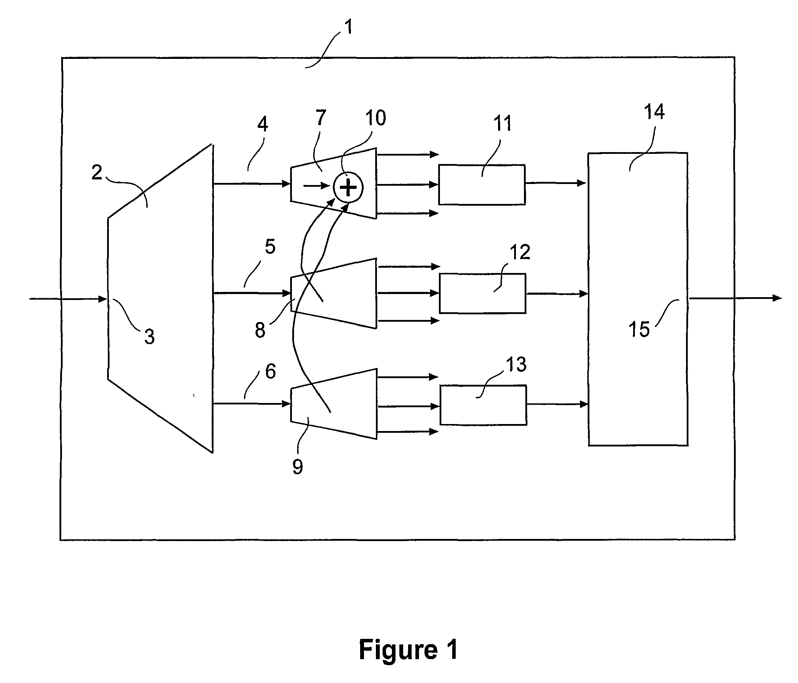

Preferred embodiments of the invention are described in detail below with reference to the only figure, at which
Figure 1 shows a preferred embodiment of a device according to the present invention.

### Detailed description of preferred embodiments

The idea behind the invention is to introduce functionality to combine (sum up) the meters of other services with a meter of/for a specific flow. In Figure 1 a TCB is drawn, where classifier classifies the traffic in for instance three flows, where the upper one corresponds to a "best effort" service and the two lower are some form of guaranteed services. At the supervision of the "best effort"-flow, all flows are summed up when decision is made on which action that shall be applied/executed. The other two flows are treated individually.

With reference to Figure 1, a TCB 1 according to the present invention consequently includes a classification device 2, that is, a classifier, which has an input port 3 for a data flow including data for a plurality of different services. The classification device 2 has in the illustrated embodiment three output ports; this, however, shall only be regarded as an example. To these three output ports the classification device 2 divides data flows 4,5,6 belonging to different services. In the illustrated embodiment, the flows 5 and 6 are guaranteed a certain bandwidth within the frame service, whereas flow 4 represents a "best effort"-service, that is, a service which utilizes bandwidth according to supply. In an exemplified embodiment a household has access to a frame service with a total bandwidth of 1000 kbps (the aggregate of the household). As a part service the household has access to IP-telephony which is guaranteed a bandwidth of 100 kbps. One then wants that the "best effort"-traffic (for instance web surfing) shall have access to 900 kbps when the IP-telephony is used, and to 1000 kbps when it is not used.

The data flows 4,5,6 each run to a metering device, that is meter 7,8,9. Each metering device is arranged to meter the data transmission speed, that is, occupied bandwidth, of the belonging flow, that is, metering device 7 meters flow 4, metering device 8 meters flow 5, and metering device 9 meters flow 6. Depending on whether metered data transmission speed exceeds agreed available bandwidth of respective service, different actions can be executed by action device 11, 12 respective 13. That the result can be different in the metering devices is represented by different arrows which run from the metering devices 7,8,9. In the queuing device 14, the data packets are queued from the different action devices so that they are transmitted in correct order from the output port 15 of TCB 1.

The characteristic feature of the invention is that metering device 7 of the "best effort"-service 4 includes a calculation device 10, arranged to sum up the metered transmission speed of the different flows 4,5,6 in TCB 1. At that, a comparison is made in metering device 7 with the whole aggregate, that is, the bandwidth of the frame service, and on basis of this comparison actions are executed in action device 11 on the "best effort"-service. In the example for a household as above, which thus relates to two flows instead of three, the invention consequently is implemented by classifying the traffic in one flow for "best effort" and one for the IP-telephony. At the supervision of the IP-telephony only the bandwidth which the IP-telephony utilizes is metered. On the other hand, at the supervision of the "best effort"-traffic, the metering of the two flows are summed up before deciding which action is to be executed. In this way one does not risk throwing away packets from the guaranteed service (the IP-telephony), which had been the case at cascade of two TCBs.

The invention can be used in routers and can with advantage be applied to edge routers in the DiffServ architecture. It is especially suitable to services which are based on two levels, for instance a plurality of guaranteed services plus "best effort".

It is to the expert in the field obvious that a number of variants and modifications of the described preferred embodiment are possible, without for that reason ending up outside the scope of the invention, which is only limited by the patent claims below.

## Claims

1. Device for service differentiation in a communication network, which device includes a classification device (1) arranged to divide data packets of different services into different flows (4,5,6), for each flow a metering device (7,8,9) arranged to meter data transmission speed, for each metering device an action device (11, 12, 13) arranged to execute actions depending on the belonging metering device, a queuing device (14) arranged to queue packets from said action devices for transmission, where said services includes a frame service with predetermined bandwidth, and within this frame service a first best-effort-service is arranged to allocate available bandwidth within the frame service and a second service, which is guaranteed a given bandwidth in the frame service, the first metering device (7) adapted to the first service includes a calculation device (10) arranged to calculate the sum of metered data transmission speed for all flows from the classification device, and the first metering device includes control devices adapted to check how the summed up transmission speed is to the predetermined bandwidth of the frame service, chacterized in that the action device (11) of the first service is adapted to throw away data packets of the first best-effort-service in case that the summed up transmission speed in the device exceeds the predetermined bandwidth of the frame service.

2. Device as claimed in claim 1, wherein available bandwidth within the frame service includes bandwidth which is guaranteed one for the time being unutilized service.

3. Device as claimed in claim 1, wherein said classification device (2) has a data input (3) for input of data belonging to different services.

4. Device as claimed in claim 1, wherein said queuing device (14) has a data output (15) for output of data belonging to different services.

5. Device as claimed in claim 1, wherein said device is included in a network unit which has a classification device (2) for each interface and traffic direction in the network unit.

6. Device as claimed in claim 3, wherein said network unit is a Diffserv-router.

7. Procedure for service differentiation in a communication network, in which network metering and processing of flows are done, belonging to a number of different services within a frame service with predetermined bandwidth, including the steps to:
- meter the transmission speed of a first best-effort-service which utilizes available bandwidth within the frame service;
- meter the transmission speed for a second service which is guaranteed access to a given bandwidth in tha frame service;
- calculate the sum of metered data transmission speed of said number of different services;
- check how the summed up transmission speed is to the predetermined bandwidth of the frame service, **characterized by** the step;
- throw away data packets of the first service in case that the summed no transmission speed in the device exceeds the predetermined bandwith of the frame service.

8. Procedure as claimed in claim 7, wherein available bandwidth within the frame service includes bandwidth which is guaranteed one for the time being unutilized service.

## Patentansprüche

1. Einrichtung für Dienstdifferenzierung in einem Kommunikationsnetz, welche Einrichtung einen Klassifikationsdienst (2), der dazu ausgebildet ist, Datenpakete unterschiedlicher Dienste in unterschiedliche Ströme (4, 5, 6) aufzuteilen, für jeden Strom eine Messeinrichtung (7, 8, 9), die dazu ausgebildet ist, die Datenübertragungsgeschwindigkeit zu messen, für jede Messeinrichtung eine Betätigungseinrichtung (11, 12, 13), die dazu ausgebildet ist, Betätigungen in Abhängigkeit von der dazu gehörenden Messeinrichtung auszuführen, eine Schlangenbildungseinrichtung (14) einschließt, die dazu ausgebildet ist, Pakete von den Betätigungseinrichtungen schlangenförmig für Übertragung anzuordnen, wobei die Dienste einen Datenübertragungsblockdienst mit vorbestimmter Bandbreite einschließen, und innerhalb dieses Datenübertragungsblocksdienstes ein erster Dienst bester Bemühungen angeordnet ist, zur Verfügung stehende Bandbreite innerhalb des Datenübertragungsblocksdienstes zuzuordnen, und ein zweiter Dienst angeordnet ist, dem eine gegebene Bandbreite in dem Datenblockübertragungsdienst garantiert ist, wobei die erste Messeinrichtung (7), die an den ersten Dienst angepasst ist, eine Berechnungseinheit (10) einschließt, die dazu ausgebildet ist, die Summe der gemessenen Datenübertragungsgeschwindigkeit für alle Ströme von der Klassifizierungseinrichtung zu berechnen, und wobei die erste Messeinrichtung Steuereinrichtungen einschließt, die dazu ausgebildet sind, zu prüfen, wie die aufsummierte Übertragungsgeschwindigkeit sich zur vorbestimmten Bandbreite des Datenübertragungsblocksdienstes verhält, **dadurch gekennzeichnet, dass** die Betätigungseinrichtung (11) des ersten Dienstes dazu ausgebildet ist, Datenpakete des ersten Dienstes bester Bemühungen in dem Falle wegzuwerfen, dass die aufsummierte Übertragungsgeschwindigkeit in der Einrichtung die vorbestimmte Bandbreite des Datenübertragungsblocksdienstes überschreitet.

2. Einrichtung nach Anspruch 1, bei der zur Verfügung stehende Bandbreite innerhalb des Datenblockübertragungsdienstes Bandbreite einschließt, die einem momentan unbenutzten Dienst garantiert ist.

3. Einrichtung nach Anspruch 1, bei der die Klassifikationseinrichtung (2) einen Dateneingang (3) für Eingabe von Daten hat, die zu unterschiedlichen Diensten gehören.

4. Einrichtung nach Anspruch 1, bei der die Schlangenbildungseinrichtung (14) einen Datenausgang (15) für Ausgabe von Daten hat, die zu den unterschiedlichen Diensten gehören.

5. Einrichtung nach Anspruch 1, bei der die Einrichtung in einer Netzeinheit eingeschlossen ist, die eine Klassifizierungseinrichtung (2) für jede Schnittstelle und Verkehrsrichtung in der Netzeinheit hat.

6. Einrichtung nach Anspruch 3, bei der die Netzeinheit ein DiffServ-Router ist.

7. Verfahren für Dienstdifferenzierung in einem Kommunikationsnetz, in dem Netzmessung und Verarbeitung von Strömen durchgeführt wird, die zu einer Anzahl von unterschiedlichen Diensten innerhalb eines Datenübertragungsblocksdienstes mit vorbestimmter Bandbreite gehören, das die Schritte einschließt:
- die Übertragungsgeschwindigkeit eines ersten Dienstes bester Bemühungen zu messen, der zur Verfügung stehende Bandbreite innerhalb der Datenübertragungsblockdienstes verwendet;
- die Übertragungsgeschwindigkeit für einen zweiten Dienst zu messen, dem Zugang zu einer vorgegebenen Bandbreite in dem Datenübertragungsblockdienstes garantiert ist;
- die Summe der gemessenen Datenübertragungsgeschwindigkeit der Anzahl von unterschiedlichen Diensten zu berechnen;
- zu prüfen, wie die aufsummierte Übertragungsgeschwindigkeit sich zur vorbestimmten Bandbreite des Datenübertragungsblockdienstes verhält, **gekennzeichnet durch** den Schritt:
- Datenpakete des ersten Dienstes in dem Falle wegzuwerfen, dass die aufsummierte Übertragungsgeschwindigkeit in der Einrichtung die vorbestimmte Bandbreite des Datenblockübertragungsdienstes überschreitet.

8. Verfahren nach Anspruch 7, bei dem zur Verfügung stehende Bandbreite innerhalb des Datenblockdienstes Bandbreite einschließt, die einem momentan unbenutzten Dienste garantiert ist.

## Revendications

1. Dispositif de différentiation de service dans un réseau de communication, ledit dispositif comporte un dispositif de classification (2) agencé de manière à diviser des paquets de données de différents services en différents flux (4, 5, 6), pour chaque flux, un dispositif de mesure (7, 8, 9) agencé de manière à mesurer la vitesse de transmission de données, pour chaque dispositif de mesure, un dispositif d'activation (11, 12, 13) agencé de manière à exécuter des actions en fonction du dispositif de mesure associé, un dispositif de mise en file d'attente (14) agencé de manière à mettre en file d'attente des paquets à partir dudit dispositif d'activation afin d'assurer la transmission, dans lequel lesdits services comportent un service global, avec une bande passante prédéterminée, et à l'intérieur de ce service global un premier service le plus économique est agencé de manière à affecter une bande passante disponible à l'intérieur du service global et un second service, dans lequel une bande passante donnée est garantie dans le service global, le premier dispositif de mesure (7) adapté sur le premier service comporte un dispositif de calcul (10) agencé afin de calculer la somme des vitesses de transmission de données mesurées pour tous les flux à partir du dispositif de classification, et le premier dispositif de mesure comporte des dispositifs de commande adaptés pour comparer les vitesses de transmission cumulées à la bande passante prédéterminée du service global, **caractérisé en ce que** le dispositif d'activation (11) du premier service est adapté afin de rejeter des paquets de données du premier service le plus économique dans le cas où les vitesses de transmission cumulées dans le dispositif excèdent la bande passante prédéterminée du service global.

2. Dispositif selon la revendication 1, dans lequel la bande passante disponible à l'intérieur du service global comprend une bande passante qui est garantie pendant le temps que le service est inutilisé.

3. Dispositif selon la revendication 1, dans lequel ledit dispositif de classification (2) présente une entrée de données (3) destinée à assurer l'entrée de données appartenant à différents services.

4. Dispositif selon la revendication 1, dans lequel ledit service de mise en file d'attente (14) présente une sortie de données (15) destinée à assurer la sortie de données appartenant à différents services.

5. Dispositif selon la revendication 1, dans lequel ledit service est intégré dans une unité de réseau qui comporte un dispositif de classification (2) pour chaque interface et direction de trafic dans l'unité de réseau.

6. Dispositif selon la revendication 3, dans lequel ladite unité de réseau est un routeur DiffServ.

7. Procédure de différentiation de service dans un réseau de communication, dans lequel la mesure de réseau et le traitement des flux, appartenant à un certain nombre de différents services, sont réalisés à l'intérieur d'un service global présentant une bande passante prédéterminée, comportant les étapes de :
- mesure de la vitesse de transmission d'un premier service le plus économique qui utilise la bande passante disponible à l'intérieur du service global ;
- mesure de la vitesse de transmission pour un second service dont l'accès est garanti à une bande passante donnée dans le service global ;
- calcul de la somme des vitesses de transmission de données mesurées desdits différents services ;
- comparaison des vitesses de transmission cumulées à la bande passante prédéterminée du service global **caractérisée par** les étapes :
de rejet des paquets de données du premier service dans le cas où les vitesses de transmission cumulées dans le service excèdent la bande passante prédéterminée du service global.

8. Procédure selon la revendication 7, dans laquelle la bande passante disponible à l'intérieur du service global comprend une bande passante qui est garantie pendant le temps que le service est inutilisé.
